**Europäisches Patentamt**

**European Patent Office**

**Office européen des brevets**

(19)

(11) Numéro de publication: **0 011 529**
**A1**

# DEMANDE DE BREVET EUROPEEN

(12)

(21) Numéro de dépôt: **79400770.8**

(22) Date de dépôt: **19.10.79**

(51) Int. Cl.³: **B 65 G 15/36**

(30) Priorité: **10.11.78 FR 7831842**

(43) Date de publication de la demande:
**28.05.80 Bulletin 80/11**

(84) Etats Contractants Désignés:
**BE DE FR GB IT NL**

(71) Demandeur: **Société Anonyme dite: BERGOUGNAN BENELUX**
**Brugse Steenweg 7**
**Evergem Rabot(BE)**

(72) Inventeur: **Pringiers, Pierre**
**Kalsijdeweg 40**
**Stalhille 8223(BE)**

(74) Mandataire: **Lernould, René**
**6 Avenue Kléber**
**F-75116 Paris(FR)**

(54) **Bande transporteuse avec armature et procédé pour sa fabrication.**

(57) Bande transporteuse dont l'armature comporte des câbles métalliques (1) et dont au moins un revêtement est en une matière plastique caractérisée en ce que les câbles métalliques sont noyés dans une couche (2) en un mélange réticulé contenant un caoutchouc qui est un copolymère de butadiène et d'acrylonitrile contenant de 20 à 50 % en poids d'acrylonitrile, un polychloroprène, un polyéthylène chlorosulfoné, un polyéthylène chloré élastomérique, un polyuréthanne se présentant sous forme solide ou pâteuse ou un mélange dè deux ou plusieurs de ces produits et en ce que le revêtement (3) contient une matière plastique qui est un polychlorure de vinyle, un polychlorure de vinylidène, un copolymère de chlorure de vinyle et d'acétate de vinyle ou un copolymère de chlorure de vinyle et de vinylidène, un polyéthylène chloré thermoplastique ou un mélange d'un ou de plusieurs de ces produits, ladite couche contenant les câbles métalliques et ledit revêtement étant en contact direct et adhérant fortement l'un à l'autre.

EP 0 011 529 A1

Bande transporteuse **TITRE MODIFIÉ**
**voir page de garde**

L'invention porte sur les bandes transporteuses dont l'armature comporte des câbles métalliques et dont les revêtements sont à base d'une matière plastique qui est un polychlorure de vinyle, un polychlorure de vinylidène, un copolymère de chlorure de vinyle et d'acétate de vinyle, un copolymère de chlorure de vinyle et de vinylidène, un polyéthylène chloré thermoplastique, ou un mélange de deux ou plusieurs de ces produits ; cette matière plastique sera désignée ci-dessous par matière plastique, sans autre précision.

Depuis longtemps, on cherche à réaliser de telles bandes transporteuses car elles combineraient les avantages de celles armées de câbles métalliques et de celles dont les revêtements sont en matière plastique, notamment en polychlorure de vinyle, mais on s'est heurté au problème de l'adhésion des câbles métalliques à la matière plastique sans arriver, jusqu'à présent, à le résoudre d'une façon satisfaisante.

L'invention a pour objet des bandes transporteuses armées de câbles métalliques dont au moins un des revêtements est en matière plastique et dans lesquelles l'adhésion entre l'armature et les revêtements en matière plastique est excellente, certaine et stable.

Dans les bandes transporteuses de l'invention, les câbles métalliques sont noyés dans une couche en un mélange élastique contenant un caoutchouc réticulé, ladite couche étant en contact direct avec les ou le revêtement en matière plastique et adhérant fortement à ces ou ce dernier ; le caoutchouc, ci-après dénommé le caoutchouc sans autre précision, qui selon l'invention peut entrer dans le mélange formant ladite couche est choisi parmi les copolymères de butadiène et d'acrylonitrile contenant de 20 à 50 % en poids d'acrylonitrile, les polychloroprènes, les polyéthylènes chlorosulfonés comme ceux commercialisés sous la marque Hypalon, les polyéthylènes chlorés élastomériques, les caoutchoucs polyuréthannes solides ou pâteux de façon à pouvoir être mis industriellement en oeuvre pour réaliser la couche comportant les câbles métalliques, ou un mélange de deux ou plusieurs de ces produits.

Les polyéthylènes chlorés sont des polymères qui selon leur teneur sont des élastomères ou des plastomères ; généralement, on considère que ce sont des élastomères lorsque leur teneur en chlore est égale ou supérieure à 26 % et des plastomères lorsque cette teneur est égale ou inférieure à 14 %. En réalité, au fur et à mesure que la teneur en chlore augmente, les polyéthylènes chlorés de plastomères deviennent progressivement des élastomères.

Pour la mise en oeuvre de l'invention, le caractère élastomérique des polyéthylènes chlorés dont la teneur en chlore dépasse 14 % est suffisamment marqué pour qu'ils puissent entrer dans le mélange formant la couche dans laquelle les câbles métalliques sont noyés et le caractère de plastomères de ceux dont la teneur en chlore est inférieure à 26 % est suffisamment marqué pour former les revêtements de la bande ; lorsque leur teneur en chlore est comprise entre 14 et 26 %, ils peuvent soit être réticulés et entrer dans le mélange dans lequel les câbles sont noyés soit ne pas être réticulés et former les revêtements de la bande.

Selon une caractéristique de l'invention, le procédé par lequel les bandes transporteuses précédentes sont fabriquées est notamment caractérisé par le fait qu'il comporte une phase au cours de laquelle on applique la ou les couches en matière plastique constituant le ou les revêtements sur la couche comportant les câbles métalliques, le caoutchouc n'étant pas alors réticulé, et que l'on porte l'ensemble à une température suffisamment élevée pour qu'il y ait fusion de la matière plastique du ou des revêtements puis réticulation du caoutchouc de la couche comportant les câbles métalliques.

D'une façon connue en soi et indépendante de l'invention, le mélange constituant la couche dans laquelle les câbles métalliques sont noyés contient, en plus du caoutchouc, les charges et ingrédients habituels comme les agents de protection et de vulcanisation ainsi que ceux éventuels destinés à faire adhérer le mélange aux câbles métalliques qui peuvent avoir été eux-mêmes traités pour cela, par exemple par laitonnage ou par enduction d'une colle appropriée. Mais selon l'invention, le mélange peut comporter une matière plastique, de préférence, mais non nécessairement, identique à celle des ou du revêtement dans une proportion qui peut être importante, par exemple jusqu'à 250 % ou plus ; cela favorise l'adhésion avec les revêtements et aussi diminue généralement le prix.

Par exemple, les mélanges de la couche dans laquelle des câbles métalliques laitonnés sont noyés peuvent être d'une des deux formules suivantes (parties en poids) :

Formule 1

- Copolymère butadiène acrylonitrile, à 32 % en poids d'acrylonitrile .................................................. 100
- Noir SRF ............................................................. 55
- Dioctylphtalate ..................................................... 12
- Antioxygène ......................................................... 2
- Oxyde de zinc ....................................................... 5
- Acide stéarique ..................................................... 1,5
- Accélérateur de vulcanisation ...................................... 1,2
- Soufre .............................................................. 4
- Naphténate de cobalt ................................................ 2,3

Formule 2

Identique à la formule 1 précédente, avec adjonction de :
- Polychlorure de vinyle .............................................. 43
- Stabilisant du polychlorure de vinyle ............................... 2

A la matière plastique des revêtements, sont associés les plastifiants, charges, pigments et autres ingrédients habituels. On peut aussi y ajouter un caoutchouc, de préférence celui qui est à la base du mélange constituant la couche dans laquelle sont noyés les câbles métalliques ; exprimée en poids, la quantité de caoutchouc associée à la matière plastique peut atteindre 100 % de cette dernière. La présence de caoutchouc d'une part plastifie la matière plastique, ce qui augmente la résistance de la bande aux chocs et d'autre part favorise l'adhésion du revêtement à la couche comportant les câbles métalliques.

Formule 3

- Polychlorure de vinyle ................................... 100

- Dioctylphtalate ......................................... 30

- Craie ................................................... 25

- Pigment de la couleur désirée ........................... 3

- Stabilisants ............................................ 2,5

- Stéarate de calcium ..................................... 1


Formule 4

- Polychlorure de vinyle ................................... 100

- Dioctylphtalate ......................................... 30

- Craie ................................................... 25

- Copolymère butadiène acrylonitrile à 32% d'acrylonitrile. 20

- Pigment de la couleur désirée ........................... 3

- Stabilisants du polychlorure de vinyle .................. 2,5

- Stéarate de calcium ..................................... 1

- Antioxygène ............................................. 1,5


La couche en un mélange à base de caoutchouc avec les câbles métalliques noyés est préparée par calandrage ou par un autre procédé connu et indépendant de l'invention, les revêtements sont mis en place par un procédé connu et indépendant de l'invention avant que cette couche soit réticulée. L'ensemble est placé sous presse et chauffé de façon que se produisent d'abord la fusion de la matière plastique et ensuite, la réticulation de la couche contenant les câbles métalliques. Au cours de cette phase, et avant la réticulation complète du caoutchouc, il se produit une interpénétration de la couche contenant les câbles métalliques et du ou des revêtements qui, ensuite, demeurent fortement liés les uns aux autres du fait de la compatibilité du caoutchouc et de la matière plastique.

L'invention sera aussi décrite à l'aide de l'exemple de réalisation suivant qui est illustré d'une figure représentant en coupe transversale une partie de bande transporteuse selon l'invention.

La bande transporteuse comporte une armature qui est ici constituée de câbles métalliques 1 parallèles et longitudinaux dont le diamètre, l'espacement et la constitution sont, ainsi que cela est bien connu de l'homme de l'art, fonction du service auquel la bande est destinée. Mais l'invention s'applique à toutes les bandes transporteuses dès lors que leur armature comporte des câbles métalliques ; par exemple l'invention s'appliquerait si en plus des câbles longitudinaux 1, l'armature comportait une ou plusieurs nappes de câbles en un textile organique ou en verre disposés transversalement ou si les câbles métalliques 1 étaient, dans un tissu, associés à des éléments de trame, métalliques ou non.

Les câbles 1 sont noyés dans une couche 2 en un mélange à base d'un caoutchouc acrylonitrile réalisé selon la formule 2 ci-dessus. L'épaisseur de la couche 2 est légèrement supérieure au diamètre des câbles 1 de façon que les câbles 1 ne soient jamais en contact direct avec les couches 3 et 4 qui sont les revêtements et qui sont à base de polychlorure de vinyle.

La couche 2 dans laquelle sont noyés les câbles 1 sert d'intermédiaire entre ces derniers et les revêtements : le mélange élastique de la couche 2 est, selon le vocabulaire usuel dans l'industrie du caoutchouc, une gomme de collage.

Les revêtements 3 et 4 sont à base d'un polychlorure de vinyle auquel est associé un caoutchouc nitrile ; réalisés selon la formule 4 ci-dessus, les revêtements 3 et 4 sont vulcanisés. L'adhésion entre la couche 2 et les revêtements 3 et 4, mesurée par pelage dans les conditions habituelles dépasse 7 daN par cm.

La couche 2 avec les câbles 1 a été réalisée par calandrage et les revêtements 3 et 4 ont été mis en place par passage à la calandre ; le nouvel ensemble, constitué par la couche 2 et les câbles 1, a été placé sous une presse et porté à une température provoquant la vulcanisation de la couche 2 et celle des revêtements 3 et 4, soit en général une température comprise entre 155°C et 185°C.

L'expérience montre que cette bande transporteuse combine les qualités et les possibilités de celles qui sont armées de câbles métalliques et de celles dont les revêtements sont en polychlorure de vinyle.

Revendications de brevet

1. Bande transporteuse dont l'armature comporte des câbles métalliques et dont au moins un revêtement est en une matière plastique, caractérisée en ce que les câbles métalliques sont noyés dans une couche en un mélange réticulé contenant un caoutchouc qui est un copolymère de butadiène et d'acrylonitrile contenant de 20 à 50 % en poids d'acrylonitrile, un polychloroprène, un polyéthylène chlorosulfoné, un polyéthylène chloré élastomérique, un polyuréthanne se présentant sous forme solide ou pâteuse ou un mélange de deux ou plusieurs de ces produits et en ce que le revêtement contient une matière plastique qui est un polychlorure de vinyle, un polychlorure de vinylidène, un copolymère de chlorure de vinyle et d'acétate de vinyle ou un copolymère de chlorure de vinyle et de vinylidène, un polyéthylène chloré thermoplastique ou un mélange d'un ou de plusieurs de ces produits, ladite couche contenant les câbles métalliques et ledit revêtement étant en contact direct et adhérant fortement l'un à l'autre.

2. Bande transporteuse selon la revendication 1 caractérisée en ce que la couche dans laquelle sont noyés les câbles métalliques contient aussi une matière plastique qui est un polychlorure de vinyle, un polychlorure de vinylidène, un copolymère de chlorure de vinyle et d'acétate de vinyle, un copolymère de chlorure de vinyle et de vinylidène, un polyéthylène chloré thermoplastique ou un mélange de deux ou plusieurs de ces produits.

3. Bande transporteuse selon l'une des revendications 1 à 2 caractérisée en ce que le revêtement contenant une matière plastique contient aussi un caoutchouc qui est un copolymère de butadiène et d'acrylonitrile contenant de 20 à 50 % en poids d'acrylonitrile, un polychloroprène, un polyéthylène chlorosulfoné, un polyéthylène chloré élastomérique, un polyuréthanne se présentant sous forme solide ou pâteuse ou un mélange de deux ou plusieurs de ces produits.

4. Procédé de fabrication d'une bande transporteuse selon l'une des revendications 1 à 3 précédentes caractérisé en ce qu'il comporte une phase au cours de laquelle l'ensemble constitué par la couche comportant les câbles métalliques et par les revêtements appliqués les uns sur les autres est porté à une température qui est supérieure à la température de fusion des ou du revêtement contenant la matière plastique et qui entraîne la vulcanisation de la couche comportant les câbles métalliques.

0011529

Offic... ....
RAPPORT DE RECHERCHE EUROPEENNE
des breve...

| | DOCUMENTS CONSIDERES COMME PERTINENTS | | CLASSEMENT DE LA DEMANDE (Int. Cl. 4) |
|---|---|---|---|
| gorie | Citation du document avec indication, en cas de besoin, des parties pertinentes | Revendica-tion concernee | |
| | US - A - 3 063 884 (W. GLOVER) <br><br> * Colonne 1, lignes 1-31; 53-62; colonne 3, lignes 8-12; colonne 2, lignes 1-11 * <br><br> -- | 1-3 | B 65 G 15/36 |
| | DE - A - 1 470 777 (DUNLOP) <br><br> * Page 1, paragraphe 4 - page 4, paragraphe 1; page 4, paragraphe 3 - page 5, para-graphe 1; page 7, paragraphe 1 - page 8, paragraphe 2; page 10, paragraphe 1 * <br><br> -- | 1,2 | |
| | GB - A - 797 749 (CABLE BELT) <br><br> * Page 1, ligne 8 - page 2, ligne 73; page 5, lignes 1-47 * <br><br> -- | 2,3 | DOMAINES TECHNIQUES RECHERCHES (Int. Cl. 3) <br><br> B 65 G 15/36 <br> B 29 H 7/22 |
| | GB - A - 1 097 034 (BTR) <br><br> GB - A - ... ... (GREENGATE IRWELL RUBBER) <br><br> US - A - 2 297 513 (P. ROBINSON) <br><br> GB - A - 736 99. (GREENGATE IRWELL RUBBER) <br><br> GB - A - 1 382 030 (COAL INDUSTRY) <br><br> ---- | | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

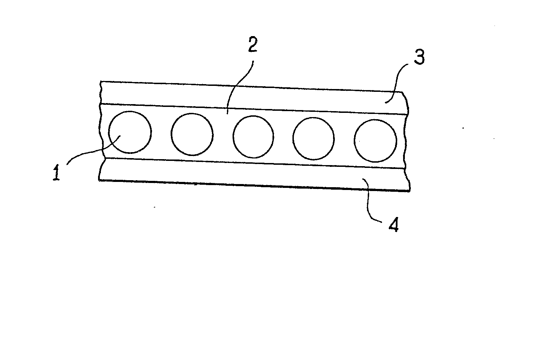

| Lieu de la recherche <br> La Haye | Date d'achèvement de la recherche <br> 18-02-1980 | Examinateur <br> SCHMITT |
|---|---|---|

OEB Form 1503.1   06.78